# EUROPÄISCHE PATENTSCHRIFT

(11) **EP 2 067 651 B1**
(45) Veröffentlichungstag und Bekanntmachung des Hinweises auf die Patenterteilung: **20.09.2017**
(21) Anmeldenummer: 08020680.8
(22) Anmeldetag: 28.11.2008
(51) Int. Cl.: B60L 13/00, E01B 25/26, B60M 1/32

(54) **Einschienenbahnanlage**
Single-rail railway system
Installation ferroviaire à un rail

(30) Priorität: 05.12.2007 DE 102007058492
(43) Veröffentlichungstag der Anmeldung: 10.06.2009
(73) Patentinhaber: Eisenmann SE, 71032 Böblingen (DE)
(72) Erfinder: Schulze, Herbert, 71134 Aidlingen (DE); Tietze, Michael, 71065 Sindelfingen (DE)
(74) Vertreter: Ostertag & Partner Patentanwälte mbB

(56) Entgegenhaltungen:
- WO-A-88/06206
- DE-U1- 8 807 284
- DE-U1- 29 615 268
- FR-A- 1 274 896
- JP-A- 55 083 620

## Beschreibung

Die Erfindung betrifft eine Einschienenbahnanlage, insbesondere Elektrohängebahn oder Elektrobodenbahn, nach dem Oberbegriff des Patentanspruchs 1.

Derartige Einschienenbahnanlagen finden dort Verwendung, wo Wagen zum Transport von Werkstücken entlang eines in seiner Führung veränderbaren Fahrweges geführt werden sollen. Ein veränderbarer Streckenbereich ermöglicht dabei eine flexible Anpassung des Fahrwegs beispielsweise an den Aufbau einer Werkshalle. Andererseits können solche veränderbare Streckenbereiche auch bei Streckenweichen eingesetzt werden, bei denen ein Teil des Streckenbereichs wahlweise in eine von mehreren Richtungen eingestellt werden soll.

Aus der EP 0 476 170 A1 ist eine Zungenweiche für eine Einschienenhängebahn bekannt, die aus einer Weichenspitze und zwei Anschlussschienen gebildet ist. Eine Gliederzunge, die aus einer Anzahl von jeweils gelenkig hintereinander angeordneten, um eine Drehachse verschwenkbare Zungengliedern gebildet ist, ist wahlweise einer der beiden Anschlussschienen zuordenbar. Dabei ist ein erstes Anschlussglied der Gliederzunge drehbar mit der Weichenspitze und ein letztes, freies Schließglied zum Verschwenker zumindest zwischen den Anschlussschienen mit einer Führung verbunden. Um die Winkelstellung des Schließgliedes bezüglich des Anschlussgliedes genau festzulegen und den jeweiligen Anschlussschienen zu problemlosen Überfahren mit einem Schienenfahrzeug genauer zuzuordnen, ist zur exakten Bestimmung der Schließstellung bei den Anschlussschienen die Führung des Schließgliedes mit einer Bogenkulisse erforderlich.

Aus der US 6.279.484 B1 ist ein beweglicher Verstellmechanismus für Gummiradfahrzeuge bekannt, der zwischen einem stationären ersten Leitschienenteil und einer Vielzahl von stationären zweiten Leitschienenteilen umschaltbar angeordnet ist. Eine Vielzahl von Führungs-Schienenteilen ist hierzu relativ zueinander schwenkbar zwischen dem ersten Leitschienenteil und den zweiten Leitschienenteilen angeordnet. Die aneinander angrenzen Stirnflächen der schwenkbaren Schienenteile liegen nur dann aneinander an, wenn die schwenkbaren Schienenteile linear angeordnet sind. Sind die Schienenteile hingegen relativ zueinander verschwenkt, so klaffen die Stirnseiten auf der kurvenäußeren Seite auseinander, so dass ein dort laufendes Rad oder eine Rolle nicht gleichmäßig geführt wird, sondern an den Übergängen zwischen den Schienenteilen Stößen ausgesetzt ist.

Eine Einschienenbahnanlage der eingangs genannten Art ist aus der DE 296 15 268 U1 bekannt geworden. Der Stellmechanismus der verschwenkbaren Weichenzunge ist dort nach dem Prinzip eines ebenen mehrgliedrigen Koppelgetriebes ausgebildet. Beim Drehpunkt der Weichenzunge ergibt sich zwischen dem Schienenende und dem benachbarten Ende der Weichenzunge eine sprungartige Änderung der Winkelstellung.

Aufgabe der vorliegenden Erfindung ist es, eine Einschienenbahnanlage der eingangs genannten Art so auszugestalten, dass eine gleichmäßige Führung der Roll-oder Gleitmittel auf den Lauf- oder Gleitflächen ohne Unterbrechung und Stöße gewährleistet ist.

Diese Aufgabe wird erfindungsgemäß durch eine Einschienebahnanlage mit den im Patentanspruch 1 angegebenen Merkmalen gelöst.

Wie im Stand der Technik an sich bekannt, wird durch die besondere Formgebung wenigstens einer der Stirnseiten als Rotationsfläche um die Schwenkachse bewirkt, dass beim Schwenken der Schienenabschnitte relativ zueinander am Übergang zwischen den Schienenabschnitten keine Lücke oder Stufe entsteht. Die Konturen der seitlichen Lauf- oder Gleitflächen der beiden Schienenabschnitte gehen so unabhängig von der Schwenkposition kontinuierlich ineinander über.

Die Schienenabschnitte sind dabei körperlich voneinander getrennte Schienenteile. Diese können platzsparend getrennt gelagert und transportiert und bedarfsgerecht modulartig zusammengebaut werden.

Erfindungsgemäß ist ein die beiden Schienenteile im Bereich deren Stirnseiten überlappender Übergangskörper, insbesondere eine Übergangsplatte, relativ zu den Schienenteilen schwenkbar angeordnet, derart, dass beim Schwenken der beiden Schienenteile relativ zueinander eine seitliche Lauf- oder Gleitfläche des Übergangskörpers einen konturangepassten Übergang zwischen den seitlichen Lauf- oder Gleitflächen der beiden Schienenteile realisiert. Auf diese Weise wird auch bei größeren Schwenkwinkeln der Übergang zwischen den beiden Schienenteile ausgeglichen, so dass keine Stufen oder Lücken entstehen.

Bei einer vorteilhaften Ausführungsform weist die zweite Stirnseite eine Stirnfläche auf, die komplementär zur Stirnfläche der ersten Stirnseite ist. Die beiden Stirnflächen liegen so flächig aneinander, so dass ein konturangepasster Übergang zwischen den seitlichen Lauf- oder Gleitflächen entsteht.

Um sie einfach realisieren und mit geringem Aufwand justieren zu können, kann die Rotationsfläche die Mantelfläche eines zur Schwenkachse koaxialen Kreiszylinders oder geraden Kreiskegels sein.

Bei einer weiteren vorteilhaften Ausführungsform gehen zumindest die seitlichen Lauf- oder Gleitflächen des Schienenabschnitts mit der ersten Stirnseite tangential in deren Stirnfläche über. Auf derart angeordneten Lauf- oder Gleitflächen können die Rollen beziehungsweise Gleitmittel seitlich von der Schwenkachse geführt werden.

Zweckmäßigerweise kann der in der Führung veränderbare Streckenbereich eine Streckenweiche sein. Insbesondere bei Streckenweichen ist es erforderlich, dass die Schienenabschnitte auch in einem größeren Winkel relativ zueinander verschwenkt werden können, ohne dass Stufen oder Lücken bei den Übergängen der Schienenabschnitte entstehen.

Alternativ oder zusätzlich können zwischen den Stirnseiten der beiden Schienenabschnitte elastische Körper zur Anpassung der Konturen der seitlichen Lauf- oder Gleitflächen der beiden Schienenabschnitte vorgesehen sein. Elastische Körper dämpfen Stöße an starken Biegungen der Lauf- oder Gleitflächen, wie sie bei großen Schwenkwinkeln entstehen können.

Bei einer weiteren vorteilhaften Ausführungsform können entlang der Schienenabschnitte Leitungen zur Energieversorgung des Wagens und/oder Signalübermittlung vom oder zum Wagen angeordnet sein, die im Bereich der Stirnseiten der beiden Schienenabschnitte flexibel sind, insbesondere Kupfergeflecht, bewegliche Kupferplatten oder Federstahl aufweisen. Über derartige Leitungen können die Wagen entlang des Fahrwegs auch an den Übergängen zwischen den Schienenabschnitten kontinuierlich mit Energie versorgt werden beziehungsweise es können kontinuierlich Signale übermittelt werden.

Um eine automatische Verstellung der Schienenabschnitte zu ermöglichen, kann vorteilhafterweise wenigstens an einem der Schienenabschnitte eine insbesondere motorisch betriebene Verstelleinrichtung zum Schwenken dieses Schienenabschnitts angreifen.

Zweckmäßigerweise kann jeder Schienenabschnitt wenigstens zwei parallele Bahnstücke, insbesondere Bahnflansche, umfassen, welche die seitliche Lauf- oder Gleitflächen aufweisen. Dies hat den Vorteil, dass mehrere parallele Rollen beziehungsweise Gleitmittel oder eine breite Rolle beziehungsweise ein breites Gleitmittel flächig und kippsicher auf den seitlichen Lauf- oder Gleitfläche fahren können beziehungsweise kann.

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden; es zeigen
- Figur 1: schematisch eine seitliche Ansicht einer Streckenweiche einer Elektrohängebahn;
- Figur 2: schematisch eine Draufsicht der Streckenweiche aus Figur 1;
- Figur 3: schematisch einen Schnitt der Streckenweiche aus den Figuren 1 und 2, die hier mit einem Linearantrieb verstellbar ist;
- Figur 4: schematisch einen Schnitt der Streckenweiche aus den Figuren 1 und 2, welche hier mit einem Schlittenantrieb verstellbar ist.

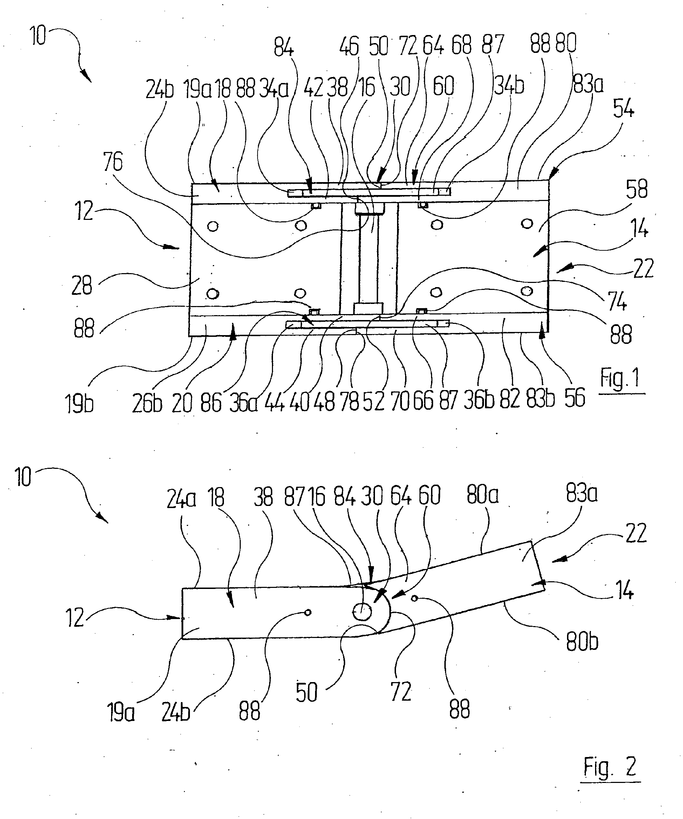

In Figur 1 ist eine insgesamt mit dem Bezugszeichen 10 versehene Streckenweiche einer Elektrohängebahn in einer Seitenansicht gezeigt. Figur 2 zeigt die Streckenweiche 10 in der Draufsicht.

Die Streckenweiche 10 umfasst zwei Schienenabschnitte, die einen Fahrweg 22 vorgeben, nämlich einen stationären Schienenteil 12, in den Figuren 1 und 2 links, und einen schwenkbaren Schienenteil 14 rechts, jeweils mit dem gleichen I-förmigen Profil.

Der schwenkbare Schienenteil 14 kann mit seinen dem stationären Schienenteil 12 abgewandten Ende wahlweise einem von wenigstens zwei in den Figuren 1 und 2 nicht gezeigten weiteren stationären Schienenteilen zugeordnet werden. Die weiteren stationären Schienenteile befinden sich auf der dem stationären Schienenteil 12 gegenüberliegenden Seite des schwenkbaren Schienenteils 14.

Bei der Verwendung von nur einem schwenkbaren Schienenteil 14 ist ein einfacher Aufbau mit geringem Justageaufwand möglich. Außerdem sind bei nur einem schwenkbaren Schienenteil 14 die zu bewegenden Massen geringer als bei vielen schwenkbaren Schienenteilen, so dass auch kürzere Schaltzeiten zum Verschwenken des schwenkbaren Schienenteils 14 realisierbar sind. Außerdem wirkt sich die geringe zu bewegende Masse auch positiv auf den Verschleiß aus.

Der stationäre Schienenteil 12 ist an der Unterseite eines nicht gezeigten an sich bekannten Stahlbaus befestigt.

Der schwenkbare Schienenteil 14 ist über eine Schwenkachse 16 mit dem stationären Schienenteil 12 verbunden. Zusätzlich ist der schwenkbare Schienenteil 14 an der Unterseite des Stahlbaus in nicht weiter interessierender Weise schwenkbar gehalten.

Der stationäre Schienenteil 12 weist in der Figur 1 lotrecht untereinander und fluchtend zwei identische längliche ebene Bahnflansche 18 und 20 auf. Die oberen und unteren Flächen der Bahnflansche 18 und 20 verlaufen parallel zueinander, in der Figur 1 horizontal. Die obere horizontale Fläche des oberen Bahnflansches 18 dient als Lauffläche 19a für Antriebs- beziehungsweise Tragrollen eines nicht gezeigten an sich bekannten Wagens der Elektrohängebahn. Die untere horizontale Fläche des unteren Bahnflansches 20 kann als Lauffläche 19b für Gegenrollen des Wagens dienen.

Die schmalen vertikalen Flächen der Bahnflansche 18 und 20 bilden obere ebene Laufflächen 24a und 24b (Figur 2) beziehungsweise untere ebene Laufflächen für Führungsrollen des Wagens der Elektrohängebahn.

Die oberen Laufflächen 24a und 24b sind in Figur 2 zu erkennen und verdecken dort die unteren Laufflächen. Eine der beiden unteren Laufflächen mit Bezugszeichen 26b ist jedoch in Figur 1 sichtbar.

Der obere Bahnflansch 18 und der untere Bahnflansch 20 sind über einen Steg 28 einstückig miteinander verbunden, welcher sich etwa mittig zwischen den oberen Laufflächen 24a und 24b beziehungsweise den unteren Laufflächen 26b erstreckt. Der Steg 28 endet auf der dem schwenkbaren Schienenteil 14 zugewandten Seite in einem Abstand von der Schwenkachse 16.

Die Bahnflansche 18 und 20 weisen jeweils im Bereich der Stirnseite 30 des stationären Schienenteils 12, die dem schwenkbaren Schienenteil 14 zugewandt ist, einen Schlitz 34a beziehungsweise 36a auf. Die Schlitze 34a und 36a verlaufen parallel zu den oberen und unteren horizontalen Laufflächen 19a, 19b der Bahnflansche 18 und 20, also senkrecht zu den Laufflächen 24 und 26. Sie erstrecken sich über die gesamte Breite der Bahnflansche 18 und 20 und sind zu den Laufflächen 24 und 26 sowie zur Stirnseite 30 hin offen. Die Bahnflansche 18 und 20 haben so im Bereich der Stirnseite 30 von der Seite betrachtet (Figur 1), eine Gabelform.

Die der Schwenkachse 16 zugewandten Stirnflächen der oberhalb der Schlitze 34a, 36a liegenden Flanschbereiche 38, 40 sind mit den Bezugszeichen 50, 52, die Stirnflächen der unterhalb der Schlitze 34a, 36b liegenden Flanschbereiche 42, 44 mit den Bezugszeichen 46, 48 versehen.

An jeweilige Stirnflächen 46 beziehungsweise 48 der unteren Flanschbereiche 42 und 44 vorbei führt die Schwenkachse 16 an ihren Enden jeweils durch den entsprechenden oberen Flanschbereich 38 oder 40 hindurch. Die Schwenkachse 16 ist in den oberen Flanschbereichen 38 und 40 jeweils vorzugsweise mittig zwischen den oberen Laufflächen 24a und 24b beziehungsweise zwischen den unteren Laufflächen 26b gelagert.

Stirnflächen 50 und 52 der oberen Flanschbereiche 38 und 40 sind jeweils als Teil einer Mantelfläche eines zur Schwenkachse 16 koaxialen Kreiszylinders ausgebildet. Der Durchmesser des Kreiszylinders entspricht der Breite der oberen beziehungsweise unteren horizontalen Laufflächen 19a, 19b der Bahnflansche 18 und 20. Die Stirnflächen 50 und 52 sind so auf die Stirnseite 30 des stationären Schienenteils 12 zu betrachtet konvex ausgebildet.

Die Stirnflächen 46 und 48 der unteren Flanschbereiche 42 und 44 sind ebenfalls als Teil einer Mantelfläche eines zur Schwenkachse 16 koaxialen zweiten Kreiszylinders, jedoch auf die Stirnseite 30 zu betrachtet, konkav ausgebildet.

Der schwenkbare Schienenteil 14 ist analog zum stationären Schienenteil 12 aufgebaut. Er weist ebenfalls einen oberen Bahnflansch 54 und einen unteren Bahnflansch 56 auf, welche über einen Steg 58 miteinander verbunden sind.

Die Bahnflansche 54 und 56 sind an derjenigen Stirnseite 60 des schwenkbaren Schienenteils 14, die dem stationären Schienenteil 12 zugewandt ist, komplementär zu den Bahnflansche 18 und 20 an der Stirnseite 30 des stationären Schienenteils 12 geformt.

Die Schwenkachse 16 ist in jeweiligen unteren Flanschbereichen 68 und 70 der Bahnflansche 54 und 56 gelagert.

Die Schlitze 34a und 36a des stationären Schienenteils 12 gehen in entsprechende Schlitze 34b und 36b im schwenkbaren Schienenteil 14 über. Die Schlitze 34b und 36b trennen jeweils einen oberen Flanschbereich 64 und 66 von dem unteren Flanschbereich 68 und 70 der Bahnflansche 54 und 56.

Die Stirnflächen 72 und 74 der oberen Flanschbereiche 64 und 66 des schwenkbaren Schienenteils 14 liegen in jeder Schwenkposition flächig an den Stirnflächen 50 beziehungsweise 52 der oberen Flanschbereiche 38 und 40 des stationären Schienenteils 12 an. Entsprechend liegen die Stirnflächen 76 und 78 der unteren Flanschbereiche 68 und 70 des schwenkbaren Schienenteils 14 in jeder Schwenkposition flächig an den Stirnflächen 46 und 48 der unteren Flanschbereiche 42 und 44 des stationären Schienenteils 12 an.

Beim Schwenken des schwenkbaren Schienenteils 14 relativ zum stationären Schienenteil 12 gleiten die einander zugewandten Stirnflächen aneinander entlang, so dass die Konturen der oberen Laufflächen 24 und der unteren Laufflächen 26 des stationären Schienenteils immer nahezu spaltfrei in die Konturen von entsprechenden oberen Laufflächen 80a und 80b und unteren Laufflächen 82 des schwenkbaren Schienenteils 14 übergehen. Entsprechendes gilt auch für die horizontalen oberen und unteren Laufflächen 19a, 19b, 83a, 83b.

In den Schlitzen 34 beziehungsweise 36 befindet sich ferner jeweils eine von zwei identischen langgestreckten, etwa quaderförmigen Übergangsplatten 84 beziehungsweise 86. Die Breite der Übergangsplatten 84 und 86 senkrecht zur Fahrtrichtung entspricht der entsprechenden Ausdehnung der Bahnflansche 18, 20, 54 und 56. Bei linearer, in den Figuren 1 und 2 nicht gezeigter, Ausrichtung der Schienenteile 12 und 14 fluchten die schmalen Längsseiten der Übergangsplatten 84 und 86 mit den oberen vertikalen Laufflächen 24 und 80 beziehungsweise den unteren vertikalen Laufflächen 26 und 82.

Die schmalen vertikalen Längsseiten der Übergangsplatten 84 und 86 bilden deren Laufflächen 87.

Die Länge der Übergangsplatten 84 und 86 in Fahrtrichtung ist geringer als die Ausdehnung der Schlitze 34 beziehungsweise 36 in dieser Richtung. Auf diese Weise stoßen die Übergangsplatten 84 und 86 beim Schwenken des schwenkbaren Schienenteils 14 nicht an den Endwänden der Schlitze 34 und 36 an.

Die Übergangsplatten 84 und 86 weisen in der Nähe ihrer schmalen Stirnflächen jeweils ein in den Figuren 1 und 2 verdecktes durchgängiges Langloch für einen Drehbolzen 88 auf. In den Langlöchern sind die Drehbolzen 88 dreh- und verschiebbar. Die Langlöcher erstrecken sich parallel zu den Längsseiten der Übergangsplatten 84 und 86.

Die Achsen der Drehbolzen 88 verlaufen parallel zur Schwenkachse 16. Die Drehbolzen 88 sind in den entsprechenden unteren Flanschbereichen 42, 44, 68 beziehungsweise 70 und den entsprechenden oberen Flanschbereichen 38, 40, 64 beziehungsweise 66 befestigt.

Etwa mittig weisen die Übergangsplatten 84 und 86 je eine durchgängige Schwenkachsenöffnung auf, welche in den Figuren 1 und 2 ebenfalls verdeckt ist. Durch die Schwenkachsenöffnungen führt die Schwenkachse 16 hindurch. Die Schwenkachsenöffnungen sind so bemessen, dass die Schwenkachse 16 in keiner Schwenkposition des schwenkbaren Schienenteils 14 an den Rändern der Schwenkachsenöffnungen anstößt.

Beim Schwenken des schwenkbaren Schienenteils 14 werden durch das Zusammenwirken der Drehbolzen 88 mit den Langlöchern automatisch die Übergangsplatten 84 und 86 in Richtung der kurveninneren seitlichen Lauffläche geschoben. In der Draufsicht der Figur 2 sind die kurveninneren seitlichen Laufflächen linke obere Lauffläche 24a und die den Figuren 1 und 2 nicht gezeigte linke untere Lauffläche des stationären Schienenteils 12, die rechte obere Lauffläche 80a und die den Figuren 1 und 2 ebenfalls nicht gezeigte rechte obere Lauffläche des schwenkbaren Schienenteils 14.

Die seitlichen Laufflächen 87 der Übergangsplatten 84 und 86 bewirken so eine Angleichung der Konturen und Glättung des Übergangs zwischen den jeweils kurveninneren Laufflächen 24, 26, 80, 82.

Bei relativ kleinen Schwenkwinkeln kann auf die Übergangsplatten 84 und 86 auch verzichtet werden.

Entlang der Schienenteile 12 und 14 verlaufen außerdem in den Figuren 5 und 6 gezeigte und dort beschriebenen Schleifleitungen 89, welche der Energieversorgung und/oder der Übermittlung von Signalen zwischen den nicht gezeigten Wagen und einer entsprechenden Steuer-und/oder Energieversorgungseinheit dienen.

Im Bereich des Übergangs zwischen dem stationären Schienenteil 12 und dem schwenkbaren Schienenteil 14 weisen diese Schleifleitungen flexible Verbindungsleitungen in Form von Kupfergeflechten auf. Die flexiblen Verbindungsleitungen passen sich allen möglichen Schwenkwinkeln an und ermöglichen so eine kontinuierliche Berührung durch die Schleifkontakte des Wagens, vorzugsweise Stromabnehmern und/oder Signalabnehmern, auch im Bereich des Übergangs.

Die Streckenweiche 10 verfügt weiter über eine nicht gezeigte Verstelleinrichtung, mit der der schwenkbare Schienenteil 14 motorisch verschwenkt werden kann.

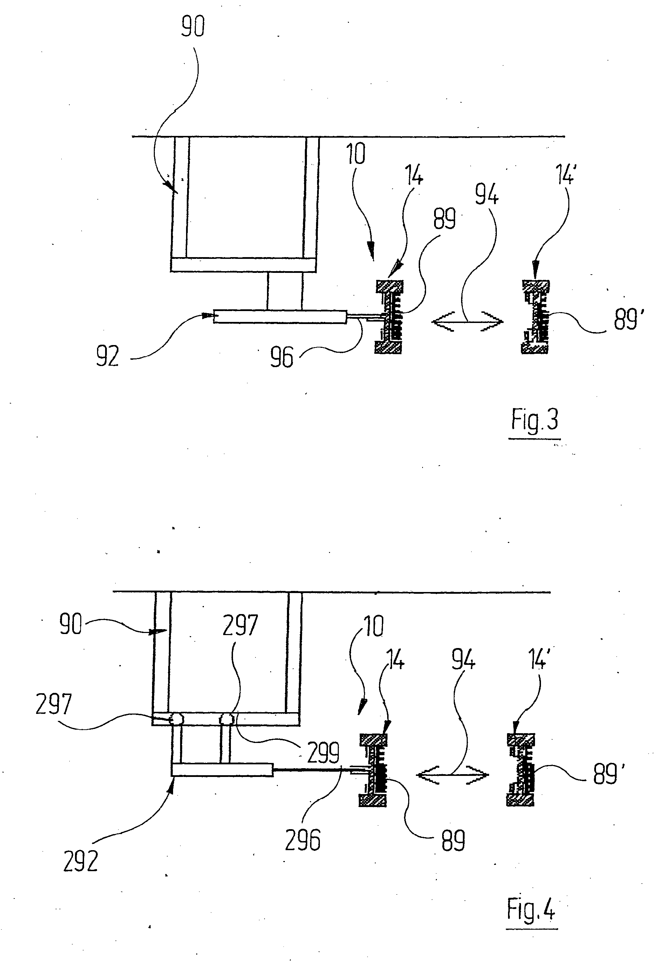

In der Figur 3 ist der schwenkbare Schienenteil 14 der Streckenweiche 10 im Querschnitt in einer ersten Schwenkposition und mit dem Bezugszeichen 14' in einer zweiten Schwenkposition gezeigt.

Die Streckenweiche 10 verfügt über ein Verstelleinrichtung gemäß einem ersten Beispiel mit einem Linearantrieb 92, mit dem über eine ausfahrbare Antriebsstange 96 der schwenkbare Schienenteil 14 quer zum Fahrweg, in Richtung eines Doppelpfeils 94, motorisch verschwenkbar ist.

Der Linearantrieb 92 ist an der Unterseite eines Stahlbauträgers 90 mit einem U-Profil befestigt.

Auf der dem Linearantrieb 92 abgewandten Seite des Stegs 28 befinden sich die in Verbindung mit dem ersten Ausführungsbeispiel der Streckenweiche 10 (Figuren 1 und 2) beschriebenen Schleifleitungen 89.

In der Figur 4 ist die Streckenweiche 10 mit einer Verstelleinrichtung gemäß einem zweiten Beispiel mit einem Schlittenantrieb 292 gezeigt. Der Schlittenantrieb 292 weist zwei Antriebsrollen 297 auf, mit denen er in einer Führungsschiene 299 an der Unterseite des Stahlbaus 90 in Schwenkrichtung 94 verschiebbar geführt ist. Der Schlittenantrieb 292 ist über eine Antriebsstange 296 mit dem schwenkbaren Schienenteil 14 verbunden.

Die Erfindung ist nicht beschränkt auf eine Streckenweiche 10, vielmehr kann sie überall dort eingesetzt werden, wo ein in der Führung veränderbarer Streckenbereich erforderlich ist.

Die Erfindung ist auch nicht beschränkt auf die Verwendung bei Elektrohängebahnen. Sie kann auch bei andersartigen Einschienenbahnanlagen, beispielsweise bei Elektrobodenbahnen, verwendet werden.

Bei dem oben beschriebenen Ausführungsbeispiel einer Streckenweiche 10 einer Elektrohängebahn sind unter Anderem folgende Modifikationen möglich:

Die Schienenteile 12, 14 können aus jedem, entsprechend der Belastung geeigneten Material gefertigt sein, beispielsweise Aluminium, Stahl oder einem Mischsystem oder auch Kunststoff.

Die Bahnflansche 18, 20, 54, 56 und/oder die Stege 28, 58 können aus dem gleichen Material oder aus unterschiedlichen Materialien sein.

Die Stege 28, 58 können statt einstückig auch mehrstükkig mit den Bahnflanschen 18, 20 verbunden auch als separate Bauteile an letzteren befestigt, beispielsweise angeschweißt, sein.

Die Stirnseiten der unteren Flanschbereiche 42 und 44 und der oberen Flanschbereiche 38 und 40 können auch identisch ausgebildet sein.

Die Schwenkachse 16 kann statt durch den entsprechenden oberen Flanschbereich 38 oder 40 hindurch auch in diesen hinein führen.

Statt der zwei identischen langestreckten, etwa quaderförmigen Übergangsplatten 84 und 86 können auch eine oder mehrere konturangepasste Übergangsplatten vorgesehen sein.

Zusätzlich oder alternativ zu den Übergangsplatten 84 und 86 können zwischen den beiden Schienenteilen 12 und 14 auch elastische Körper, beispielsweise Gummiblöcke, vorgesehen sein, welche beim Schwenken des schwenkbaren Schienenteiles 14 eine Angleichung der Konturen der Laufflächen 24, 26, 80, 82 bewirken.

Statt einer Energieversorgung über Schleifleitungen kann auch eine berührungslose Energieübertragung, beispielsweise über Induktionsleitungen, vorgesehen sein.

Es ist nicht zwingend erforderlich, dass die jeweils konkaven Stirnflächen 72, 46, 74, 48 Teil von Kreiszylinderflächen sind. Es genügt, wenn sie so ausgebildet sind, dass die jeweils an die Laufflächen 24, 26, 80, 82 angrenzenden Ränder der konkaven Stirnflächen 72, 46, 74, 48 an der jeweils entsprechenden konvexen Stirnfläche 50, 76, 52 beziehungsweise 78 entlang gleiten.

Anstelle eines Kreiszylinders kann auch eine andere Rotationsfläche um die Schwenkachse 16, beispielsweise ein gerader Kreiskegel, vorgesehen sein, um die konkaven Stirnflächen 72, 46, 74, 48 zu realisieren.

Die seitlichen Laufflächen 24, 26, 80, 82 müssen auch nicht parallel zur Schwenkachse 16, in Figur 1 vertikal verlaufen. Sie können auch wenigstens im Bereich der Stirnseiten der Schienenteile 12, 14 tangential in eine andersartige Rotationsfläche, insbesondere eine gerade Kegelfläche, um die Schwenkachse übergehen. Die seitlichen Laufflächen 24, 26, 80, 82 verlaufen dann geneigt zu den oberen und unteren Laufflächen 19, 83 der Bahnflansche 18, 20, 54, 56.

Anstelle der Kupfergeflechte können an den Übergängen zwischen den Schienenteilen 12, 14 auch andersartige flexible Verbindungsleitungen, beispielsweise andere Metalldrahtgeflechte, bewegliche Metallplatten oder Federstahl, verwendet werden.

## Patentansprüche

1. Einschienenbahnanlage, insbesondere Elektrohängebahn oder Elektrobodenbahn, mit wenigstens einem in seiner Führung veränderbaren Streckenbereich (10), der wenigstens zwei entlang eines Fahrweges (22) aufeinander folgende, jeweils an entsprechenden Stirnseiten (30, 60) einander zugewandte Schienenabschnitte (12, 14) umfasst, die körperlich voneinander getrennte Schienenteile (12, 14) und relativ zueinander um eine Schwenkachse (16) schwenkbar sind, wobei die Schienenabschnitte (12, 14) entlang des Fahrweges (22) aneinander anschließende seitliche Lauf- oder Gleitflächen (24, 26, 80, 82) aufweisen, an denen Roll- oder Gleitmittel eines Wagens abrollen oder gleiten können,
wobei
wenigstens eine Stirnfläche (50, 52) einer ersten Stirnseite (30) eines der Schienenabschnitte (12) als Teil einer Rotationsfläche um die Schwenkachse (16) ausgebildet ist;
eine an die Stirnfläche (50, 52) der ersten Stirnseite (30) angrenzende zweite Stirnseite (60) des anderen Schienenabschnitts (14) so ausgebildet ist, dass sie in jeder Schwenkposition wenigstens mit ihren an die seitlichen Lauf- oder Gleitflächen (24, 26, 80, 82) angrenzenden Rändern an der Stirnfläche (50, 52) der ersten Stirnseite (30) anliegt,
**dadurch gekennzeichnet, dass**
ein die beiden Schienenteile (12, 14) im Bereich deren Stirnseiten (30, 60) überlappender Übergangskörper, insbesondere eine Übergangsplatte (84, 86), relativ zu den Schienenteilen (12, 14) schwenkbar angeordnet ist, derart, dass beim Schwenken der beiden Schienenteile (12, 14) relativ zueinander eine seitliche Lauf- oder Gleitfläche (87) des Übergangskörpers (84, 86) einen konturangepassten Übergang zwischen den seitlichen Lauf- oder Gleitflächen (24, 26, 80, 82) der beiden Schienenteile (12, 14) realisiert.

2. Einschienenbahnanlage nach Anspruch 1, **dadurch gekennzeichnet, dass** die zweite Stirnseite (60) eine Stirnfläche (72, 74) aufweist, die komplementär zur Stirnfläche (50, 52) der ersten Stirnseite (30) ist.

3. Einschienenbahnanlage nach Anspruch 1 oder 2, **dadurch gekennzeichnet, dass** die Rotationsfläche die Mantelfläche eines zur Schwenkachse (16) koaxialen Kreiszylinders oder geraden Kreiskegels ist.

4. Einschienenbahnanlage nach einem der vorherigen
Ansprüche, **dadurch gekennzeichnet, dass** zumindest die seitlichen Lauf- oder Gleitflächen (24, 26) des Schienenabschnitts (12) mit der ersten Stirnseite (30) tangential in deren Stirnfläche (50, 52) übergehen.

5. Einschienenbahnanlage nach einem der vorherigen
Ansprüche, **dadurch gekennzeichnet, dass** der in der Führung veränderbare Streckenbereich eine Streckenweiche (10) ist.

6. Einschienenbahnanlage nach einem der vorherigen
Ansprüche, **dadurch gekennzeichnet, dass** zwischen den Stirnseiten der beiden Schienenabschnitte elastische Körper zur Anpassung der Konturen der Lauf- oder Gleitflächen der beiden Schienenabschnitte vorgesehen sind.

7. Einschienenbahnanlage nach einem der vorherigen
Ansprüche, **dadurch gekennzeichnet, dass** entlang der Schienenabschnitte (12, 14) Leitungen (89) zur Energieversorgung des Wagens und/oder Signalübermittlung vom oder zum Wagen angeordnet sind, die im Bereich der Stirnseiten der beiden Schienenabschnitte (12, 14) flexibel sind, insbesondere Kupfergeflecht, bewegliche Kupferplatten oder Federstahl aufweisen.

8. Einschienenbahnanlage nach einem der vorherigen
Ansprüche, **dadurch gekennzeichnet, dass** wenigstens an einem der Schienenabschnitte (14) eine insbesondere motorisch betriebene Verstelleinrichtung (92; 292) zum Schwenken dieses Schienenabschnitts (14) angreift.

9. Einschienenbahnanlage nach einem der vorherigen
Ansprüche, **dadurch gekennzeichnet, dass** jeder Schienenabschnitt (12, 14) wenigstens zwei parallele Bahnstücke, insbesondere Bahnflansche (18, 20, 54, 56), umfasst, welche die seitlichen Lauf- oder Gleitflächen (24, 26, 80, 82) aufweisen.

## Claims

1. Single-rail track system, in particular a suspended electric track or floor-mounted electric track, having at least one path region (10) which can be changed in terms of its guidance and which comprises at least two rail portions (12, 14) which follow one another along a travelway (22) and each face one another at corresponding end sides (30, 60), which rail portions are rail parts (12, 14) which are physically separated from one another and are pivotable relative to one another about a pivot axle (16), wherein the rail portions (12, 14) have, along the travelway (22), mutually adjoining lateral running or sliding surfaces (24, 26, 80, 82) on which rolling or sliding means of a wagon can roll or slide,
wherein
at least one end face (50, 52) of a first end side (30) of one of the rail portions (12) is designed as part of a surface of rotation about the pivot axle (16);
a second end side (60) of the other rail portion (14) that adjoins the end face (50, 52) of the first end side (30) is formed in such a way that it bears in each pivoting position against the end face (50, 52) of the first end side (30) at least by way of its edges which adjoin the lateral running or sliding surfaces (24, 26, 80, 82),
**characterized in that**
a transition body, in particular a transition plate (84, 86), which overlaps the two rail parts (12, 14) in the region of their end sides (30, 60) is arranged pivotably relative to the rail parts (12, 14) in such a way that, when the two rail parts (12, 14) are pivoted relative to one another, a lateral running or sliding surface (87) of the transition body (84, 86) produces a contour-adapted transition between the lateral running or sliding surfaces (24, 26, 80, 82) of the two rail parts (12, 14).

2. Single-rail track system according to Claim 1, **characterized in that** the second end side (60) has an end face (72, 74) which is complementary to the end face (50, 52) of the first end side (30).

3. Single-rail track system according to Claim 1 or 2, **characterized in that** the surface of rotation is the lateral surface of a circular cylinder or straight circular cone which is coaxial to the pivot axle (16).

4. Single-rail track system according to one of the preceding claims, **characterized in that** at least the lateral running or sliding surfaces (24, 26) of the rail portion (12) merge tangentially with the first end side (30) in the end face (50, 52) thereof.

5. Single-rail track system according to one of the preceding claims, **characterized in that** the path region which can be changed in terms of its guidance is a path switch (10).

6. Single-rail track system according to one of the preceding claims, **characterized in that** elastic bodies for adapting the contours of the running or sliding surfaces of the two rail portions are provided between the end sides of the two rail portions.

7. Single-rail track system according to one of the preceding claims, **characterized in that** lines (89) for supplying energy to the wagon and/or for signal transmission from or to the wagon are arranged along the rail portions (12, 14) and are flexible in the region of the end sides of the two rail portions (12, 14), the lines in particular having copper braid, movable copper plates or spring steel.

8. Single-rail track system according to one of the preceding claims, **characterized in that** an, in particular motor-operated, adjusting device (92; 292) acts at least on one of the rail portions (14) in order to pivot this rail portion (14).

9. Single-rail track system according to one of the preceding claims, **characterized in that** each rail portion (12, 14) comprises at least two parallel track pieces, in particular track flanges (18, 20, 54, 56), which have the lateral running or sliding surfaces (24, 26, 80, 82).

## Revendications

1. Installation à voie monorail, notamment voie électrifiée suspendue ou voie électrifiée au sol comportant au moins une ligne de trajectoire (10) à tracé variable, munie d'au moins deux segments de rails (12, 14) en succession mutuelle le long d'un trajet de déplacement (22), qui sont respectivement tournés l'un vers l'autre au niveau de faces extrêmes (30, 60) correspondantes, se présentent comme des parties de rails (12, 14) physiquement séparées l'une de l'autre, et peuvent pivoter l'un par rapport à l'autre autour d'un axe de pivotement (16), lesdits segments de rails (12, 14) étant dotés de surfaces latérales (24, 26, 80, 82) de roulement ou de glissement se rattachant les unes aux autres le long dudit trajet de déplacement (22), et sur lesquelles des moyens de roulement ou de glissement d'un chariot peuvent rouler ou glisser,
sachant
qu'au moins une surface frontale (50, 52) d'une première face extrême (30) de l'un (12) des segments de rails est réalisée en tant que partie d'une surface de révolution autour de l'axe de pivotement (16) ;
qu'une seconde face extrême (60) de l'autre segment de rail (14), attenante à ladite surface frontale (50, 52) de la première face extrême (30), est réalisée de façon telle qu'elle soit en applique contre ladite surface frontale (50, 52) de ladite première face extrême (30), dans chaque position prise par pivotement, au moins par ses bords contigus aux surfaces latérales (24, 26, 80, 82) de roulement ou de glissement,
**caractérisée par le fait**
**qu'**un corps de transition, en particulier une platine de transition (84, 86) chevauchant les deux parties de rails (12, 14) dans la région des faces extrêmes (30, 60) de ces dernières, est implanté(e) avec faculté de pivotement par rapport auxdites parties de rails (12, 14), de telle sorte que, lors du pivotement relatif desdites deux parties de rails (12, 14), une surface latérale (87) de roulement ou de glissement dudit corps de transition (84, 86) matérialise une transition, avec adaptation de profils, entre les surfaces latérales (24, 26, 80, 82) de roulement ou de glissement desdites deux parties de rails (12, 14).

2. Installation à voie monorail selon la revendication 1, **caractérisée par le fait que** la seconde face extrême (60) présente une surface frontale (72, 74) complémentaire de la surface frontale (50, 52) de la première face extrême (30).

3. Installation à voie monorail selon la revendication 1 ou 2, **caractérisée par le fait que** la surface de révolution est la surface de l'enveloppe d'un cylindre droit ou d'un cône circulaire droit, coaxial à l'axe de pivotement (16).

4. Installation à voie monorail selon l'une des revendications précédentes, **caractérisée par le fait qu'**au moins les surfaces latérales (24, 26) de roulement ou de glissement du segment de rail (12) fusionnent tangentiellement dans la première face extrême (30), dans la surface frontale (50, 52) de cette dernière.

5. Installation à voie monorail selon l'une des revendications précédentes, **caractérisée par le fait que** la ligne de trajectoire à tracé variable est une bifurcation de trajectoire (10).

6. Installation à voie monorail selon l'une des revendications précédentes, **caractérisée par le fait que** des corps élastiques sont prévus entre les faces extrêmes des deux segments de rails, en vue de l'adaptation des profils des surfaces de roulement ou de glissement desdits deux segments de rails.

7. Installation à voie monorail selon l'une des revendications précédentes, **caractérisée par le fait que** des conducteurs (89), posés le long des segments de rails (12, 14) en vue de l'alimentation du chariot en énergie et/ou de la transmission de signaux en provenance dudit chariot, ou à l'adresse de ce dernier, sont doués de flexibilité dans la région des faces extrêmes des deux segments de rails (12, 14) et comportent, en particulier, un tressage de cuivre, des plaquettes de cuivre mobiles, ou de l'acier à ressorts.

8. Installation à voie monorail selon l'une des revendications précédentes, **caractérisée par le fait qu'**un dispositif de réglage (92 ; 292), à actionnement notamment motorisé, vient en prise avec au moins l'un (14) des segments de rails afin de faire pivoter ce segment de rail (14).

9. Installation à voie monorail selon l'une des revendications précédentes, **caractérisée par le fait que** chaque segment de rail (12, 14) inclut au moins deux pièces de cheminement parallèles, en particulier des ailes de cheminement (18, 20, 54, 56) comportant les surfaces latérales (24, 26, 80, 82) de roulement ou de glissement.
